# EUROPEAN PATENT APPLICATION

(11) **EP 4 686 625 A1**
(43) Date of publication of application: **04.02.2026**
(21) Application number: 24191404.3
(22) Date of filing: 29.07.2024
(51) Int. Cl.: B60T 13/26, B60T 13/38, B60T 15/18

(54) **PARKING VALVE ASSEMBLY FOR A BRAKE SYSTEM, BRAKE SYSTEM AND TRAILER**

(71) Applicant: KB Intellectual Property GmbH & Co. KG, 82049 Pullach (DE)
(72) Inventor: NÉGYESI, Ferenc Zoltán, 80809 München (DE)

(57) **Abstract**

A parking valve assembly (1) for a pneumatic brake system (50) is disclosed. The parking valve assembly (1) comprises:
- a valve assembly supply port (2) configured to receive a pneumatic supply pressure;
- at least one valve assembly output port (3) configured to output a pneumatic output pressure;
- a first valve assembly control port (4) configured to receive a first pneumatic control pressure; and
- a pressure-controlled valve (6), wherein
the pressure-controlled valve (6) is configured to connect the valve assembly supply port (2) to the at least one valve assembly output port (3), according to the first control pressure supplied to the first valve assembly control port (4).

Further, a brake system with said parking assembly and a trailer are disclosed.

## Description

The present disclosure relates to a parking valve assembly for a pneumatic brake system, a brake system and a trailer.

Trailers, in particular for commercial vehicles, comprising self-activated brakes like spring-loaded brake elements need a reliable solution to deactivate the spring-loaded brake elements when the vehicle is moving with the trailer. Otherwise, there is a risk that the brake elements may be activated unintendedly when the vehicle is moving. When the vehicle is in stand still, e.g., in a parking state, the brakes shall be activated reliable.

Therefore, it is an object of the present disclosure, to provide a solution allowing a reliable deactivation of the brake elements when the vehicle is moving.

This object is achieved by the subject matter of the independent claims. Further embodiments are the subject matter of the dependent claims, the following description and the drawings.

According to an aspect of the present disclosure, a parking valve assembly for a pneumatic brake system is provided. The parking valve assembly comprises a valve assembly supply port configured to receive a pneumatic supply pressure, at least one valve assembly output port configured to output a pneumatic output pressure, a first valve assembly control port configured to receive a first pneumatic control pressure and a pressure-controlled valve.

The pressure-controlled valve may be configured to connect the valve assembly supply port to the at least one valve assembly output port, according to the first control pressure supplied to the first valve assembly control port. In particular, the parking valve assembly may be configured to maintain an output pressure output from the out least one valve assembly output port for controlling at least one brake element of a brake system, the parking valve assembly is provided in. In particular, the brake elements of the brake system may be deactivated, if the pressure output from the valve assembly output port exceeds a predetermined threshold. In particular, the parking valve assembly may be configured to self-maintain the output pressure output from the at least one output port. Thereby, safe deactivation of the at least one brake element is realized.

According to one embodiment, the pressure-controlled valve comprises a first control inlet connected to the first valve assembly control port and a second control inlet connected to the at least one valve assembly output port. The pressure-controlled valve is configured to connect the valve assembly supply port to the at least one valve assembly output port, if the first control pressure from the first valve assembly control port supplied to the first control inlet exceeds a predetermined threshold or if a pressure supplied to the second control inlet exceeds a predetermined threshold. Both thresholds may be identical or different.

The pneumatic output pressure supplied from the at least one valve assembly output port may be configured or used to deactivate brake elements of a brake system the parking valve assembly is provided in. The output pressure may be a pressure that is used as a control pressure releasing the actual pressure supplied to the brake elements or it may be a pressure that can be directly supplied to the brake elements for deactivation.

The parking valve assembly comprises two ways to establish a connection between the valve assembly supply port and the at least one valve assembly output port. In the one hand, the connection may be established actively by supplying the first pneumatic control pressure to the first control inlet. This allows access e.g. from a control unit of the brake system to establish the connection. In the other hand, once the connection is established, the parking valve assembly is configured to maintain the connection between the valve assembly supply port and the at least one valve assembly output port. This is realized by the second control inlet of the pressure-controlled valve assembly, whereby the pressure from the output port is supplied to this second control inlet. If this pressure exceeds the corresponding predetermined threshold, the connection is maintained. I.e., the connection is self-maintaining. As the pneumatic output pressure from the output port may be used for deactivating the brake elements of a brake system, the parking valve assembly according to the present disclosure allows to deactivate the brake elements in a reliable and durable manner. In particular, a malfunction like a drop of pressure at the first control valve assembly control port of the parking valve assembly, e.g. due to a leakage at the first valve assembly control port or due to a malfunction of the control unit does not affect the connection once established.

According to one embodiment, the pressure-controlled valve is a relay valve. A pneumatically controlled relay valve is independent from an electric or electronic activation. In particular, when the pressure-controlled valve is configured as a proportional relay valve, it is possible to control the brake elements between a released state and a fully activated state. I.e., the parking valve assembly valve may then be used for supplying a pneumatic output pressure for service braking, e.g., when the main service brake function of the trailer is not available.

According to one embodiment, the parking valve assembly further comprises a sliding element configured to be moved between a first sliding element position and a second sliding element position according to the first control pressure from the first valve assembly control port supplied to the first control inlet and/or according to the pressure supplied to the second control inlet. The sliding element may be configured as an element extending along a moving direction between the first sliding element position and the second sliding element position. The sliding element may comprise an axis extending along the moving direction. In particular, the sliding element may be configured as a piston or as a rod, wherein its axis is in parallel to the moving direction. The sliding element may be configured to establish the connection between the valve assembly supply port and the at least one valve assembly output port when it is in the second sliding element position and to block the connection when it is in the first sliding element position. For blocking or establishing the connection, the sliding element may comprise respective sealing elements and/or recesses and/or protrusions and/or openings and/or channels configured to block and to establish the connection depending on the sliding element position. In particular, the sealing elements and/or recesses and/or protrusions and/or openings and/or channels may be configured to interact with sealing elements and/or recesses and/or protrusions and/or openings and/or channels of a housing or of a valve body, the sliding element is provided in. The sliding element is therefore configured as a pneumatic element that can be realized as a reliable and durable element. Sealing elements like O-rings can be designed durable over lifetime so that maintenance effort of the parking valve assembly can be low. The same applies for the recesses and/or protrusions and/or openings and/or channels.

The pressure-controlled valve may comprise a first pressure chamber and a second pressure chamber, wherein a first piston is movably provided limiting the first pressure chamber and a second piston is movably provided limiting the second pressure chamber, wherein the first pressure chamber is connected to the first control inlet and the second pressure chamber is connected to the second control inlet. The first piston and the second piston may be configured to apply a force on the sliding element according to the pressure acting on the first piston and according to the pressure acting on the second piston. As the first pressure chamber is connected to the first control inlet, the first piston may apply a force on the sliding element to initially establish the connection from the valve assembly supply port to the at least one valve assembly output port. This is realized by moving the sliding element from the first sliding element position to the second sliding element position by a force generated by the first control pressure supplied to the first pressure chamber and acting on the first piston.

Preferably, when the sliding element is moved from the first sliding element position to the second sliding element position, the second piston is also moved in a position corresponding position. Thereby, the second piston is in a position, where it can hold the sliding element in the second sliding element position once the output pressure supplied from the at least one valve assembly output port is supplied to the second pressure chamber to act on the second piston. For this purpose, the sliding element may comprise sealing elements and/or recesses and/or channels configured to establish a connection from the at least one output port of the parking valve assembly or from the second port of the pressure-operated valve to the second pressure chamber. I.e., once the sliding element is in the second sliding element position, the second pressure chamber is supplied with pneumatic pressure.

The second pressure chamber is independent from the first pressure chamber. I.e., when the pressure in the first pressure chamber drops due to a controlled venting of the first pressure chamber or due to a malfunction, the sliding element is still kept in the second sliding element position due to the pressure acting on the second piston in the second pressure chamber. I.e., the once established connection from the valve assembly supply port to the at least one valve assembly output port is maintained by the sliding element in the second sliding element position. Thereby, the output pressure at the at least one output port is maintained and therefore, the brake elements of the brake system the parking valve assembly is provided in are reliably deactivated.

According to one embodiment, the second pressure chamber is provided in the first piston. I.e., the second piston is at least partially provided in the first piston. In other words: the second piston is movably provided in the first piston. This allows a compact design of the parking valve assembly in the moving direction of the first and the second piston.

According to one embodiment, the second piston is connected to the sliding element or formed as one piece with the sliding element. Thereby, a combination of the sliding element and the second piston is provided. This design of the sliding element and the second piston ensures that the second piston is moved the same distance as the sliding element when the sliding element is moved between the first sliding element position and the second sliding element position.

According to one embodiment, the parking valve assembly further comprises a switching element. The switching element may comprise a first switching state configured to disconnect the pressure-controlled valve from the at least one valve assembly output port and connecting the valve assembly supply port to the at least one valve assembly output port. Additionally or alternatively, the switching element may comprise a second switching state configured to connect the the pressure-controlled valve to the at least one valve assembly output port and to disconnect the valve assembly supply port from the at least one valve assembly output port. The first switching state of the switching element may be a bypass switching state, whereby the pressure-controlled valve is disconnected from the at least one valve assembly output port. I.e., pneumatic pressure supplied to the at least one valve assembly output port by the parking valve assembly cannot be controlled by the pressure-controlled valve. Instead, the connection may be a direct connection from the valve assembly supply port to the at least one valve assembly output port. In this particular state of the switching element, the pressure-controlled valve is bypassed. The bypassing may be used for realizing a shunt function of the brake system the parking valve assembly is provided in. This is explained in more detail later in this document. Otherwise, when the switching element is in the second switching state, the switching element may be configured not to affect the pneumatic pressure supplied from the pressure-controlled valve to the at least one valve assembly output port. The switching element may then be in a pass-through state.

According to one embodiment, the parking valve assembly may further comprise a second valve assembly control port configured to receive a second control pressure. The switching element may comprise a control inlet connected to the second valve assembly control port. The switching element may be configured to switch into the second switching state if the second control pressure supplied to the control inlet exceeds a predetermined threshold. Additionally or alternatively, the switching element may be configured to switch into the first switching state if the second control pressure supplied to the control inlet is below the predetermined threshold. By supplying the respective control pressure to the second valve assembly control port, the switching state may be controlled actively, e.g. by supplying a respective pressure from a brake system supply port like a coupling head of the trailer.

The switching element may be configured to return to the first switching state when the second control pressure drops below the predetermined threshold, in particular when the coupling head is disconnected or vented. In this case, in particular when the trailer is in a parking state, this ensures that the pressure-controlled valve is bypassed in this state.

According to one embodiment, the switching element comprises a switching element sliding element configured to be moved between a first switching element sliding element position and a second switching element sliding element position according to the second control pressure. The switching element sliding element may be configured as a piston or as a slider, wherein the switching element sliding element may comprise sealing elements and/or recesses and/or channels configured to block and to establish the connections according to the first switching state and according to the second switching state of the switching element. The distance between first switching element sliding element position and the second switching element sliding element position may be arranged on an extension of the distance defined by the first sliding element position and the second sliding element position of the pressure-controlled valve. This leads to a compact design of the parking valve assembly as these elements are arranged without offset to each other.

According to one embodiment, the parking valve assembly comprises a valve body, wherein the pressure-controlled valve and/or the switching element are provided in the valve body. The valve body may be formed by a monolithic block comprising sealing elements and/or recesses and/or channels configured to interact with moving parts of the parking valve assembly for establishing or disconnecting the respective connections described above. In particular, the valve body may guide the first piston and/or the second piston and/or the sliding element of the pressure-controlled valve and/or the switching element sliding element and/or the valve body may comprise the valve assembly supply port and/or the at least one valve assembly output port and/or the first valve assembly control port and/or the second valve assembly control port. The partial or complete integration of these elements leads to a compact design of the parking valve assembly. Preferably all these elements are provided in the valve body, whereby the parking valve assembly may be configured as an integral valve.

According to a further aspect of this disclosure, a brake system for a trailer is provided. For a person skilled in the art, it is clear that features and details related to the brake system which were described above in the context of the parking valve assembly, may also be seen at least as embodiments of the brake system described in the following.

The brake system comprises a parking valve assembly as described above, a control unit, a brake system supply port and at least one brake element.

The at least one brake element may comprise a pressure operated brake element and may be configured to be activated when a brake pressure supplied to the at least one brake element is below a predetermined threshold. In particular, the pressure operated brake element may be configured as a spring-loaded brake element.

The control unit may be configured to control a pneumatic control pressure supplied as the first control pressure to the first valve assembly control port. Thereby, the control unit may control the connection of the pressure-controlled valve from the valve assembly supply port to the at least one valve assembly output port.

As brake system supply port, the brake system may comprise a coupling head of the trailer configured to be connected to a towing vehicle like a commercial vehicle.

The control unit may be configured as electro-pneumatic control unit.

The control unit may be configured to supply the first pneumatic control pressure to the first valve assembly control port.

The control unit may be configured to activate a parking state by venting the at least one valve assembly output port. The venting may be carried out by the control unit.

According to one embodiment, the brake system is configured to deactivate a parking state, by supplying a first control pressure exceeding the predetermined threshold to the first valve assembly control port. Thereby, the brake system is configured to release the at least one brake element when the pneumatic output pressure from the at least one output port of the parking valve assembly exceeds a predetermined threshold. According to one embodiment, the pneumatic output pressure may be used as a control pressure, in particular by the control unit, wherein a corresponding brake pressure is generated to release the at least one brake element. This allows a realisation of a smaller parking valve assembly. According to another embodiment, the pneumatic output pressure may be directly used as brake pressure to release the at least one brake element. This allows the realisation of a less complex brake system as the pneumatic output pressure may be supplied directly to the at least one brake element.

According to one embodiment, the brake system is configured to maintain the parking state after activation when the first control pressure is reduced below the predetermined threshold.

As the parking valve assembly is configured to self-maintaining the output pressure supplied by the at least one output port, the deactivated parking state is also maintained reliably and durably.

According to one embodiment, the brake system comprises a parking valve assembly with a second valve assembly control port configured to receive a second control pressure and a switching element as described above. The brake system may further comprise a control valve assembly and a pressure reservoir, wherein the control valve assembly is configured to connect the pressure reservoir to the valve assembly supply port when the switching element is in the first switching position. Further, the brake system supply port is connected to the second valve assembly control port.

This embodiment relates to a parked trailer, wherein the brake system supply port is disconnected. In this particular case, the brake system may comprise a shunt function to move the trailer without supplying pressure to the brake system supply port, in particular without supplying pressure to the coupling head.

In this case, the first valve assembly control port and the second valve assembly control port of the parking valve assembly are depressurized. The second valve assembly control port is depressurized due to the depressurized brake system supply port. In addition, the at least one output port is depressurized and therefore, the at least one brake element is activated. To move the trailer without supplying pressure to the brake system supply port, the brake system is configured to supply pressure from the pressure reservoir of the brake system, which may be configured as a pressurized air tank, by the valve assembly supply port. As in this state of the brake system the second valve assembly control port is depressurized, the switching element is in its first switching state, wherein the pressure-controlled valve of the parking valve assembly is bypassed and wherein a direct connection from the valve assembly supply port to the at least one valve assembly output port is established.

By switching the control valve assembly in a connecting state, a connection is established from the pressure reservoir to the valve assembly supply port. Due to the first switching state of the switching element of the parking valve assembly, the pressure from the pressure reservoir is therefore directly supplied from the valve assembly supply port to the at least one valve assembly output port and output from the output port as pneumatic output pressure. When this output port exceeds the predetermined threshold for releasing the at least one brake element, the at least one brake element is released and the parking state of the trailer is movable. Thereby, the brake system comprises a shunt function.

The control valve assembly may be configured as a manually operated valve assembly, allowing an operator to manually switch to the shunt state of the brake system. In particular, the control valve assembly may be configured as a shunt valve or as a part of a park and shunt valve.

According to a further aspect of this disclosure, a trailer for a vehicle, in particular for a commercial vehicle is provided. The trailer comprises a brake system as described above.

In the following, embodiments of the present disclosure are described with reference to the enclosed drawings.
- Fig. 1: shows a schematic example of a parking valve assembly according to the present disclosure.
- Fig. 2: shows a schematic example of a parking valve assembly according to a first operating state.
- Fig. 3: shows a schematic sectional view of the parking valve assembly shown in Fig. 2 according to a second state.
- Fig. 4: shows a schematic sectional view of the parking valve assembly shown in Fig. 2 according to a third state.
- Fig. 5: shows a schematic sectional view of the parking valve assembly shown in Fig. 2 according to a fourth state.
- Fig. 6: shows a brake system according to an embodiment of the disclosure.

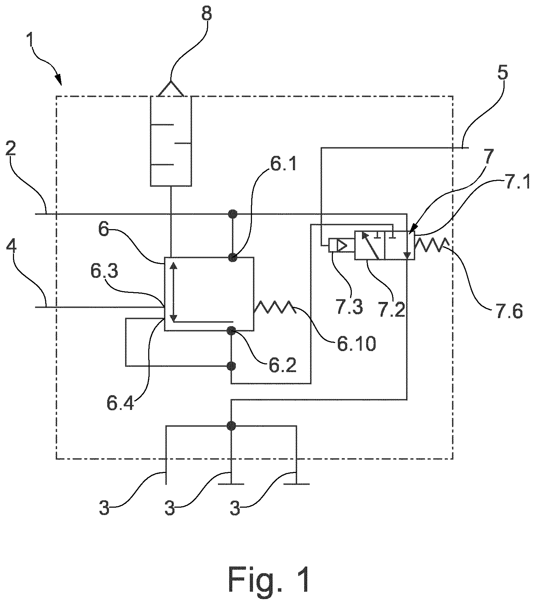

**Fig. 1** shows a schematic pneumatic circuit diagram of a parking valve assembly according to an embodiment of the disclosure.

A parking valve assembly 1 is shown comprising a valve assembly supply port 2, at least one valve assembly output port 3, a first valve assembly control port 4, a second valve assembly control port 5, a pressure-controlled valve 6 and a switching element 7.

The pressure-controlled valve 6 comprises a first control inlet 6.3 connected to the valve assembly control port 4 and a second control inlet 6.4 connected to the at least one valve assembly output port 3.

The switching element 7 comprises a first switching state 7.1, a second switching state 7.2 and a control inlet 7.3. The switching element 7 comprises a spring reset element 7.6 configured to reset the first switching state 7.1 if the control inlet 7.3 is depressurized.

The pressure-controlled valve 6 comprises a first opening 6.1 connected to the valve assembly pressure supply port 2 and a second opening 6.2 connected to the switching element 7. The valve assembly control port 4 is connected to the first control inlet 6.3. The second control inlet 6.4 is connected to the second opening 6.2 of the pressure-controlled valve 6. The valve assembly supply port 2 is connected to the switching element 7. The at least one valve assembly output port 3 is connected to the switching element 7.

The pressure-controlled valve 6 is further connected to an exhaust 8 of the parking valve assembly 1.

In the drawing, the parking valve assembly 1 is shown in a depressurized state. In this state, the first opening 6.1 of the pressure-controlled valve 6 and the second opening 6.2 of the pressure-controlled valve 6 are disconnected and the second opening 6.2 of the pressure-controlled valve 6 is vented via the exhaust 8 due to the reset spring element 6.10. Further, in this state, the switching element 7 is in the first switching state 7.1 due to its spring reset element 7.6, wherein the valve assembly supply port 2 is directly connected to the at least one valve assembly output port 3 and wherein the second port 6.2 of the pressure-controlled valve 6 is disconnected from the at least one valve assembly output port 3.

The parking valve assembly 1 works as follows.

The parking valve assembly 1 may be used in a brake system, wherein the brake system is activated, i.e., the brake elements are activated, when no output pressure is output from the at least one valve assembly output port 3. The brake elements may be configured as spring-loaded brake elements, like spring-loaded brake cylinders. The brake system may be the brake system of a trailer of a commercial vehicle.

In a state of the parking valve assembly 1, wherein the trailer is coupled to a towing vehicle, a supply pressure is supplied to the valve assembly supply port 2 and a second control pressure is supplied to the second valve assembly control port 5. The second control pressure is supplied from the second valve assembly control port 5 to the control inlet 7.3 of the switching element 7. The second control pressure exceeding a predetermined threshold of the switching element 7, in particular set by the force of the spring reset element 7.6 acting against the second control pressure at the control inlet 7.3. This causes the switching element 7 to switch to its second switching state 7.2, wherein the valve assembly supply port 2 is disconnected from the at least one valve assembly output port 3 and wherein the second opening 6.2 of the pressure-controlled valve 6 is connected to the at least one valve assembly output port 3. As the first valve assembly control port 4 stays depressurized in this state, the pressure-controlled valve 6 stays in the shown switching state, wherein the first opening 6.1 and the second opening 6.2 are disconnected. In this state, no pressure is supplied to the at least one valve assembly output port 3 and therefore no signal to the brake system is supplied to release the brake elements. I.e., in this state, the brake elements are activated, and the trailer may be in a parked state.

In a next state, when a first pneumatic control pressure is supplied to the first valve assembly control port 4 this first pneumatic control pressure is supplied from the first valve assembly control port 4 to the first control inlet 6.3 of the pressure-controlled valve 6. When the first pneumatic control pressure exceeds a predetermined threshold in particular set by the force of the spring reset element 6.10 acting against the first control pressure at the first control inlet 6.3, the pressure-controlled valve 6 connects the first opening 6.1 to the second opening 6.2, wherein the second opening 6.2 is disconnected from the exhaust 8. In this state, pneumatic pressure is supplied from the valve assembly supply port 2 via the connection of the first opening 6.1 and the second opening 6.2 to the switching element 7. As the switching element 7 is in the second switching state 7.2, the pressure is supplied through the switching element 7 to the at least one valve assembly output port 3. This pressure is then supplied from the at least one valve assembly output port 3 to the brake system and if this pressure exceeds a predetermined threshold, this pressure may be used to release the brake elements of the brake system, the parking valve assembly 1 is provided in.

Further, pressure supplied via the established connection between the first opening 6.1 and the second opening 6.2 of the pressure-controlled valve 6 is also supplied to the second control inlet 6.4 of the pressure-controlled valve 6. This pressure supplied to the second control inlet 6.4 maintains the connection between the first opening 6.1 and the second opening 6.2 established against the spring reset element 6.10 of the pressure-controlled valve 6 when it exceeds the threshold set by the spring reset element 6.10 of the pressure-controlled valve 6. I.e., once the connection between the first opening 6.1 and the second opening 6.2 of the pressure-controlled valve 6 is established, this connection can be self-maintained by the parking valve assembly 1, in particular by the pressure-controlled valve 6. This allows a reliable and durable supply of pneumatic pressure via the at least one valve assembly output port 3 independently from the first control pressure supplied to the first valve assembly control port 4. The trailer can now be moved, in particular towed by a towing vehicle. In this state the parking valve assembly 1 does not need the first control pressure to be supplied to the first valve assembly control port 4 as the connection between the first opening 6.1 and the second opening 6.2 of the pressure-controlled valve 6 is self-maintained by the pressure supplied to the second control inlet 6.4. Therefore, the first valve assembly control port 4 can be depressurized, once the second control inlet 6.4 of the pressure-controlled valve 6 is pressurized to maintain the connection between the first opening 6.1 and the second opening 6.2.

For reestablishing the parking state, it is sufficient to reduce the supply pressure to the valve assembly supply port 2 under the predetermined threshold of the second control inlet 6.4. In this case, when the supply pressure is under the predetermined threshold set by the spring reset element 6.10, the pressure acting on the second control inlet 6.4 of the pressure-controlled valve 6 cannot hold the spring force of the spring reset element 6.10 anymore and the pressure-controlled valve 6 closes the connection between the first opening 6.1 and second opening 6.2, wherein the second opening 6.2 is reconnected to the exhaust 8 and thereby vented.

Further, when the second control pressure is maintained at the second valve assembly control port 5, the at least one valve assembly output port 3 is still connected to the second opening 6.2 of the pressure-controlled valve 6 via the switching element 7 in the second switching state 7.2 and thereby vented via the exhaust 8. Alternatively, when the second control pressure supplied to the second valve assembly control port 5 is reduced as well, in particular when it is the same pressure as the supply pressure supplied to the valve assembly supply port 2, the switching element 7 switches to the first switching state 7.1 and thereby, the at least one valve assembly output port 3 is directly connected to the valve assembly supply port 2 and thereby vented. In both cases, the output pressure at the at least one valve assembly output port 3 is reduced and if it drops below a predetermined threshold, the brake elements of the brake system, the parking valve assembly 1 is provided in, are activated and the trailer is in a parking state.

Further, when the trailer is in a parked state and shall be moved, without connecting the trailer with a towing vehicle and in particular without connecting the brake system supply port, e.g. the coupling head of the trailer to a towing vehicle, it is sufficient to pressurize the valve assembly supply port 2, e.g. from a pressure reservoir of the trailer like a pressurized air tank. As the switching element 7 is still in the first switching state 7.1 due to the depressurized second control inlet 5 and the therefore depressurized control inlet 7.3, the valve assembly supply port 2 is directly connected to the at least one valve assembly output port 3 and therefore, if the pressure supplied to the valve assembly supply port 2 is sufficient, the pressure output from the at least one valve assembly output port 3 causes the brake elements of the brake system the parking valve assembly 1 is provided in to be deactivated. Therefore, the parking valve assembly 1 enables a shunt function of a brake system.

The shunt function may be activated by operating a control valve assembly which connects the reservoir to the valve assembly supply port.

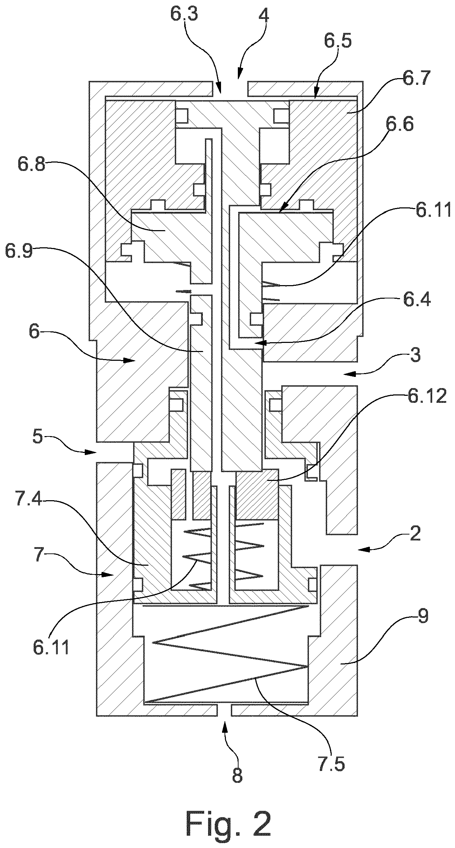

**Fig. 2** shows a schematic sectional view of a parking valve assembly according to a first state.

The parking valve assembly 1 is shown in a depressurized state.

The parking valve assembly 1 is similar to the parking valve assembly shown in Fig. 1. Therefore, the same elements are labelled with the same reference signs.

A sectional view of a valve body 9 is shown. The valve body 9 comprises a valve assembly supply port 2, a valve assembly output port 3, a first valve assembly control port 4, a second valve assembly control port 5, a pressure-controlled valve 6 and a switching element 7.

The pressure-controlled valve 6 is connected to the valve assembly supply port 2 and to the valve assembly output port 3. The pressure-controlled valve 6 comprises a first piston 6.7 guided in the valve body 9 and limiting a first pressure chamber 6.5, a second piston 6.8 guided in the first piston 6.7 and limiting a second pressure chamber 6.6, wherein the second pressure chamber 6.6 is also limited by the first piston 6.7. The pressure-controlled valve 6 comprises a blocking element 6.12 and reset springs 6.11 acting on the second piston 6.8 and on the blocking element 6.12.

In the shown state, the first piston 6.7 is in a first piston position, wherein the first piston 6.7 is held in the first piston position by the reset spring 6.11 acting on the second piston 6.8, wherein the second piston 6.8 abuts to the first piston 6.7. In this position, the first pressure chamber 6.5 has a minimum extension, wherein the first pressure chamber 6.5 can be extended when the first piston 6.7 is moved downwards into the second piston position. In the drawing, the second pressure chamber 6.6 has a minimum extension and it is located between the first piston 6.7 and the second piston 6.8 below the first piston 6.7. The second piston 6.8 is shown in a first piston position, wherein the second pressure chamber 6.6 can be extended, when the second piston 6.8 is moved downwards and away from the first piston 6.7 into a second piston position.

A sliding element 6.9 extends downwards which is connected to the second piston 6.8, wherein the sliding element 6.9 extends downwards from the side of the second piston 6.8 turned away from the second pressure chamber 6.6. The sliding element 6.9 forms a part of the second piston 6.8.

In the shown state, the blocking element 6.12 is in a first position, wherein the blocking element 6.12 is held in the first position by the reset spring 6.11 acting on the blocking element 6.12. The reset spring 6.11 is provided on a switching element sliding element 7.4 of the switching element 7. The blocking element 6.12 comprises an opening like a hole, in particular a through hole, wherein in the shown state, the opening is closed due to the sliding element 6.9 abutting to the blocking element 6.12.

Further, in the shown state, a connection between the valve assembly supply port 2 and the valve assembly output port 3 is established, wherein a connection from the valve assembly output port 3 to the exhaust 8 is closed by the blocking element 6.12 due to the sliding element 6.9 abutting to the blocking element 6.12.

The parking valve assembly 1 works as follows.

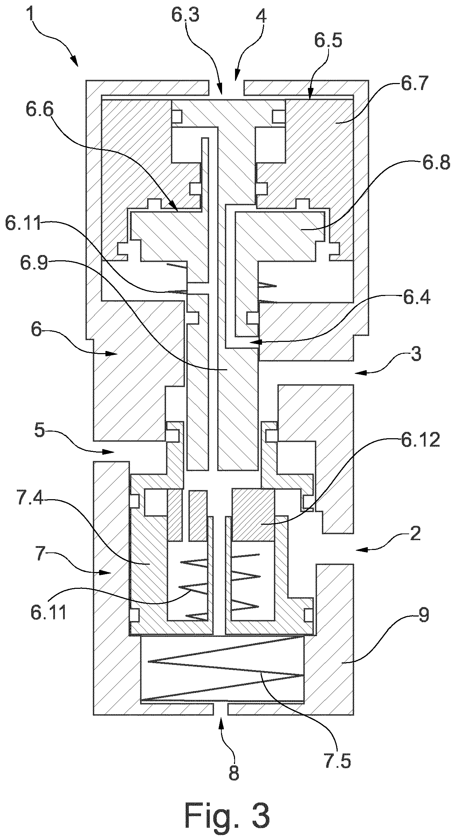

When a second control pressure is supplied to the second valve assembly control port 5, the switching element sliding element 7.4 is moved downwards into its second switching element sliding element position due to the second control pressure acting on the switching element sliding element 7.4. Thereby, the blocking element 6.12 is moved downwards by the switching element sliding element 7.4. causing a disconnection of the valve assembly supply port 2 and the valve assembly output port 3. Instead, the valve assembly output port 3 is now connected to the exhaust 8 via the opening of the blocking element 6.12. This state is shown in **Fig. 3****.**

When a pneumatic supply pressure is supplied to the valve assembly supply port 2, e.g. as the trailer is coupled to a towing vehicle, wherein the supply pressure is supplied from the towing vehicle to the valve assembly supply port 2 via a coupling head of the brake system, the parking valve assembly 1 stays in the shown state, wherein the connection between the valve assembly supply port 2 and the valve assembly output port 3 is blocked by the blocking element 6.12 of the pressure-controlled valve 6. I.e., in this state, the valve assembly supply port 2 is pressurized however, no pneumatic pressure is supplied to the valve assembly output port 3. I.e., the brake elements of the brake system stay activated.

The second control pressure supplied to the second valve assembly control port 5 and the supply pressure supplied to the valve assembly supply port 2 may be the same pressure. I.e., the switching element 7 may always be switched to the shown position when a brake system supply port like a coupling head is pressurized, e.g. from a towing vehicle.

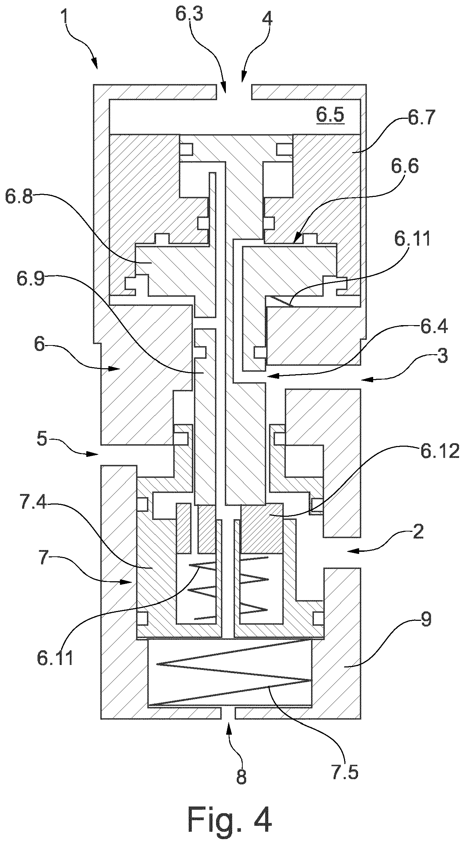

For deactivating the brake elements, a first control pressure is supplied to the valve assembly control port 4. The first pressure chamber 6.5 is thereby pressurized and a force based on the control pressure acts downwards on the first piston 6.7. If this force exceeds a predetermined threshold set by the reset spring 6.11 acting to the second piston 6.8, the first piston 6.7 and the second piston 6.8 are moved downwards as a block due to the pressure in the first pressure chamber 6.5, wherein they reach their second piston positions. This state is shown in **Fig. 4****.** In this case, since both pistons 6.7, 6.8 abut to each other, the force of the reset spring 6.11 acting on the second piston 6.8 is applied also to the first piston 6.7. The first control pressure may be supplied to the valve assembly control port 4 by a control unit of the brake system.

In the second piston position, the second piston 6.8 respectively the sliding element 6.9 abuts to the blocking element 6.12, thereby closing the opening of the blocking element 6.12 and thereby closing the connection from the valve assembly output port 3 to the exhaust 8. Further, in this state, the blocking element 6.12 was moved by the second piston 6.8 respectively the sliding element 6.9 downwards from the position shown in Fig. 3, wherein, when the second piston 6.8 is in its second piston position as shown in the drawing of Fig. 4, the blocking element 6.12 releases a connection from the valve assembly supply port 2 to the valve assembly output port 3. In this state, pressure is supplied from the valve assembly supply port 2 to the valve assembly output port 3 via the pressure-controlled valve 6. The output pressure supplied from the valve assembly output port 3 to the brake system causes the brake elements of the brake system to be deactivated.

Further, the sliding element 6.9 comprises a second control inlet 6.4. The second control inlet 6.4 is, in particular in the second piston position of the second piston 6.8, connected to the valve assembly output port 3. Thereby, pressure from the valve assembly output port 3 is supplied through a channel in the sliding element 6.9 upwards into the second pressure chamber 6.6. Since the control pressure is still supplied to the first pressure chamber 6.5, the parking valve assembly 1 stays in the switching state shown in Fig. 4.

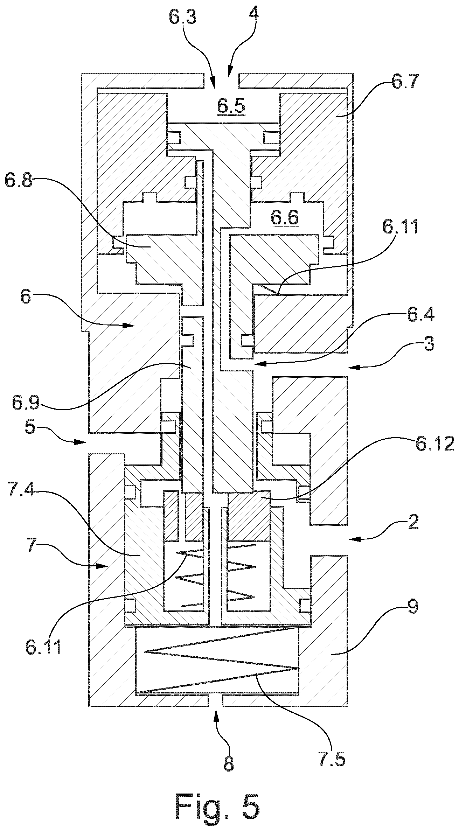

If the first pressure chamber 6.5 is depressurized since the control unit does not supply the first control pressure to the valve assembly control port 4 anymore, the first piston 6.7 is moved upwards to the first piston position of the first piston 6.7 due to the pressure still being supplied to the second pressure chamber 6.6 from the second control inlet 6.4, wherein the second piston 6.8 is maintained in its second piston position. This switching state is shown in **Fig. 5****.** In this state, the second pressure chamber 6.6 has its maximum extension since the first piston 6.7 and the second piston 6.8 are spaced apart from each other in the first piston position and in the second piston position, respectively.

In this state, the second piston 6.8 is maintained in the second piston position abutting to the blocking element 6.12 and thereby maintaining the connection between the valve assembly supply port 2 and the valve assembly output port 3 independently from the position of the first piston 6.7. I.e., in this state, the connection between the valve assembly supply port 2 and the valve assembly output port 3 is self-maintained by the pressure-controlled valve 6 and therefore the deactivation of the brake elements of the brake system is carried out reliably.

To reactivate the brake elements, e.g. for parking the trailer, in particular when the trailer is uncoupled from the towing vehicle, venting the valve assembly supply port 2 leads to a venting of the valve assembly output port 3 and therefore to a reactivation of the brake elements of the brake system. When the valve assembly supply port 2 is vented, e.g. by uncoupling the trailer from the towing vehicle, e.g. by disconnecting the coupling head, or by the control unit, the pressure supplied to the valve assembly output port 3 and to the second control inlet 6.4 is reduced simultaneously as it is the same pressure, namely the pneumatic supply pressure.

If the pressure supplied to the second control inlet 6.4 is below the threshold set by the reset springs 6.11 which are connected in series due to the abutting of the second piston 6.8 and the blocking element 6.12, the second piston 6.8 returns to the first piston position as shown in Fig. 2 and the blocking element 6.8 returns to the position shown in Fig. 2 due to the reset springs 6.11.

Further, if the second valve assembly control port 5 is also depressurized, only a force is applied to the switching element sliding element 7.4 by the reset spring 7.5.

In this state, the connection between the valve assembly supply port 2 and the valve assembly output port 3 is reestablished, however both ports are depressurized. The exhaust 8 is closed again due to the sliding element 6.9 abutting to the blocking element 6.12 as shown in Fig. 2. In this state, no output pressure is supplied from the at least one valve assembly output port 3 and therefore, the brake elements are activated. The brake system respectively the trailer, is in a parking state.

The parking valve assembly 1 according to Fig. 2 to 5 shows technical possibilities for realizing the concept of the parking valve assembly 1 according to Fig. 1. In particular, the pressure-controlled valve 6 and the switching element 7 are provided in one valve body 9 wherein the axis of the pistons 6.7, 6.8 and the axis of the blocking element 6.12 and the axis of the switching element sliding element 7.4 are arranged coaxially to each other, leading to a compact design of the parking valve assembly 1.

In particular, the valve assembly 1 shown in Fig. 2 to 5 can be configured as a single valve.

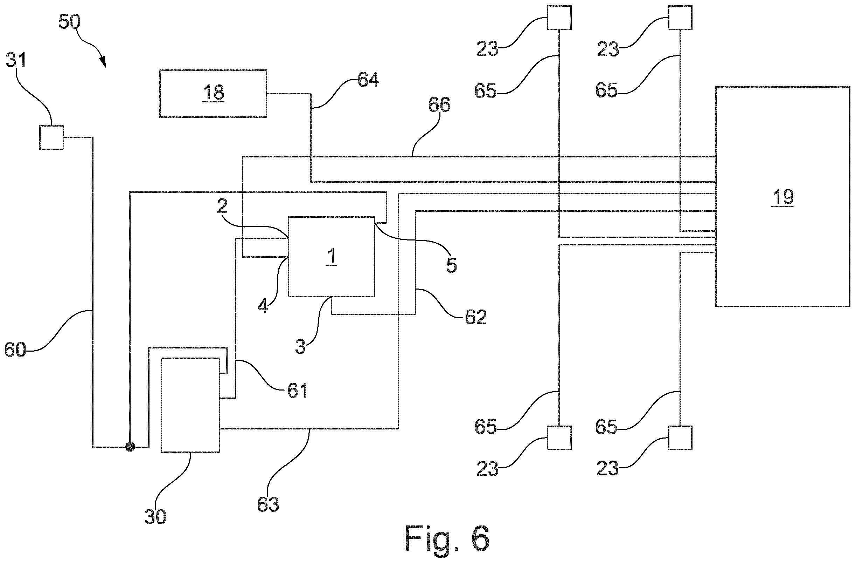

**Fig. 6** shows a brake system with a parking valve assembly.

The parking valve assembly 1 of the brake system 50 may be a parking valve assembly 1 as shown in Fig. 1 or 2.

The brake system 50 is a brake system for a trailer of a commercial vehicle.

The brake system 50 comprises a control unit 19. The control unit 19 is configured as electro-pneumatic control unit, wherein the control unit 19 comprises a pneumatic portion configured to control, receive and supply pneumatic pressure to the corresponding lines.

The control unit 19 is configured to supply a first pneumatic control pressure via the line 66 to the valve assembly control port 4 of the parking valve assembly 1.

The control unit 19 is configured to supply a brake pressure via the lines 65 to the brake elements 23 of the brake system 50 for deactivating the brake elements 23, as they are configured as spring-loaded brake elements, like spring-loaded brake cylinders.

The control unit 19 is configured to receive an output pressure from the at least one valve assembly supply port 3 of the parking valve assembly 1 via line 62, whereby the control unit 19 is configured to generate the brake pressure based on the received output pressure.

The brake system 50 comprises a brake system supply port 31 configured to supply a supply pressure to the brake system 50. The brake system supply port 31 may be configured as a coupling head configured to be connected to a pressure source of a towing vehicle, the trailer is coupled to.

The brake system supply port 31 is connected via line 60 to a control valve assembly 30. The control valve assembly 30 may be a park valve or a park and shunt valve configured to have control access to the brake elements by an operator.

The brake system 50 comprises a pressure reservoir 18 connected via line 64 to the control unit 19, wherein the pressure reservoir 18 can supply pressure from the pressure reservoir 18 to the control unit 19.

The valve assembly supply port 2 of the parking valve assembly 1 is connected to the control valve assembly 30 via the line 61, whereby supply pressure from the brake system supply port 31 can be supplied to the valve assembly supply port 2 of the parking valve assembly 1.

In the shown state, no pressure is supplied to the brake system supply port 31. As the second valve assembly control port 5 is connected to line 60 as well and therefore to the depressurized brake system supply port 31, the switching element 7 shown in Fig. 1 bypasses the pressure-controlled valve 6 shown in Fig. 1 and directly connects the valve assembly supply port 2 to the at least one valve assembly output port 3.

A connection between the valve assembly supply port 2 and the at least one valve assembly output port 3 is established via the parking valve assembly 1, however, no pressure is output from the at least one valve assembly output port 3 and therefore, the brake elements 23 stay in an activated state.

The brake system 50 works as follows.

In a first operating state, the brake system 50 is in a parking state, wherein the valve assembly output port 3 is depressurized and therefore, the control unit 19 does not receive a pressure via line 62. Therefore, lines 65 are depressurized by the control unit 19 und therefore, the brake elements 23 are activated

If the brake system supply port 31 is pressurized by connecting the brake system supply port 31 to a pressure source, e.g. from a towing vehicle, supply pressure is supplied to the valve assembly supply port 2 via the lines 60 and 61 and supply pressure is supplied as second control pressure via line 60 to the second valve assembly control port 5. As long as line 66 is depressurized, i.e., when the control unit supplies no control pressure to the valve assembly control port 4, the parking valve assembly blocks a connection between the valve assembly supply port 2 and the at least one valve assembly output port 3.

To switch to a moving state, i.e., to deactivate the brake elements 23, the control unit 19 receives an electronic control signal (not shown) and supplies a first pneumatic control pressure via line 66 to the valve assembly control port 4. As described in Fig. 1, this causes the parking valve assembly 1 to connect the valve assembly supply port 2 to the at least one valve assembly output port 3, whereby the supply pressure from the valve assembly supply port 2 is supplied to the at least one valve assembly output port 3 and further via line 62 to the control unit 19. The control unit 19 generates a brake pressure based on the received output pressure or uses the received output pressure as brake pressure. The brake pressure is then supplied from the control unit 19 via the lines 65 to the brake elements 23 causing deactivation of the brake elements 23. I.e., the parking state is terminated and the brake system 50 is in a moving state.

As described above in the context to Fig. 1, the parking valve assembly 1 is configured to self-maintain the connection between the valve assembly supply port 2 and the at least one valve assembly output port 3. Therefore, the moving state with deactivated brake elements 23 is maintained as long as the valve assembly output port 3 supplies the output pressure to the control unit 19. As the connection between the valve assembly supply port 2 and the at least one valve assembly output port 3 is maintained once established, the control unit 19 depressurizes the line 66 and therefore supplies no control pressure to the first valve assembly control port 4 in this moving state.

For re-activating the parking state, the control unit 19 is configured to depressurize the line 62 and thereby to depressurize the at least one valve assembly output port 3. As described in the context of Fig. 1, this causes the parking valve assembly 1 to disconnect the valve assembly supply port 2 and the valve assembly output port 3 and to return to the initial switching state.

Further for re-activating the parking state, the brake system supply port 31 may be disconnected from the supply source of the towing vehicle. Thereby, the lines 60 and 61 and thereby the valve assembly supply port 2 is depressurized. Further, the second valve assembly control port 5 is depressurized as well as it is also connected to line 60. Therefore, the valve assembly supply port 2 and the at least one valve assembly output port 3 are connected via the switching element 7 shown in Fig. 1 and therefore, the at least one valve assembly output port 3 is depressurized via line 60 and the depressurized brake system supply port 31. In this state, no output pressure is output via line 62 to the control unit 19 and therefore, the brake elements 23 are not hindered by from being activated again. The brake system 50 is in a parking state again.

For activating the shunt function, i.e. for deactivating the brake elements 23 when no supply pressure is supplied to the brake system supply port 31, e.g. since the trailer is not coupled to a towing vehicle, the brake system 50 is configured to supply pressure from the reservoir 18 to the control unit 19 via line 62 causing the brake elements 23 to be deactivated.

For this purpose, an operator can activate the shunt state by operating the control valve assembly 30 accordingly. This establishes a connection from the pressure reservoir 18 to the control unit 19 via the line 64 further, from the control unit 19 to the control valve assembly 30 via line 63 and further from the control valve assembly 30 to the valve assembly supply port 2 via line 61. I.e., pressure is supplied from the pressure reservoir 18 to the valve assembly supply port 2, wherein the brake system supply port 31 is depressurized. As described in the context of Fig. 1, the valve assembly supply port 2 is connected to the at least one output port 3 via the switching element 7, which is in the first switching state 7.1 due to the depressurized second valve assembly control port 5. I.e., the pressure supplied to the valve assembly supply port in this state bypasses the pressure-controlled valve if the parking valve assembly 1 and is directly supplied to the at least one valve assembly output port 3.

Therefore, the pressure from the pressure reservoir 18 is supplied to the control unit 19 and thereby a brake pressure is supplied to the brake elements 23 via the lines 65.

Therefore, the brake elements 23 are deactivated and therefore, the brake system is in a shunt state, wherein the trailer can be moved.

The present disclosure relates to elements like valve assemblies or arrangements for brake systems, in particular, safepark systems, and such brake systems designed these valve assemblies to avoid rollaway accidents in case of wrong coupling head connection order by driver. In particular, for each of the embodiments shown in this disclosure, the brake elements of such brake system are only released acively be a signal, e.g. a control signal from the brake system or from the control unit.

The term "port" was used in the description above. This is not only intended to mean a pneumatic port configured to be connected with a corresponding line. Instead, also connections, interfaces or openings in general fall under the meaning of this term. The term "port" is therefore to be understood broadly in the context of the present disclosure.

### REFERENCE SIGNS

- 1: parking valve assembly
- 2: valve assembly supply port
- 3: valve assembly output port
- 4: first valve assembly control port
- 5: second valve assembly control port
- 6: pressure-controlled valve
- 6.1: first opening
- 6.2: second opening
- 6.3: first control inlet
- 6.4: second control inlet
- 6.5: first pressure chamber
- 6.6: second pressure chamber
- 6.7: first piston
- 6.8: second piston
- 6.9: sliding element
- 6.10: reset spring element
- 6.11: reset spring
- 6.12: blocking element
- 7: switching element
- 7.1: first switching state
- 7.2: second switching state
- 7.3: control inlet
- 7.4: switching element sliding element
- 7.5: reset spring
- 7.6: spring reset element
- 8: exhaust
- 9: valve body
- 18: pressure reservoir
- 19: control unit
- 23: brake element
- 30: control valve assembly
- 31: brake system supply port
- 50: brake system
- 60-68: lines

## Claims

1. A parking valve assembly (1) for a pneumatic brake system (50), the parking valve assembly (1) comprising:
- a valve assembly supply port (2) configured to receive a pneumatic supply pressure;
- at least one valve assembly output port (3) configured to output a pneumatic output pressure;
- a first valve assembly control port (4) configured to receive a first pneumatic control pressure; and
- a pressure-controlled valve (6), wherein
the pressure-controlled valve (6) is configured to connect the valve assembly supply port (2) to the at least one valve assembly output port (3), according to the first control pressure supplied to the first valve assembly control port (4).

2. The parking valve assembly (1) according to claim 1, wherein
the pressure-controlled valve (6) comprises a first control inlet (6.3) connected to the first valve assembly control port (4) and a second control inlet (6.4) connected to the at least one valve assembly output port (3), wherein the pressure-controlled valve (6) is configured to connect the valve assembly supply port (2) to the at least one valve assembly output port (3), if the first control pressure from the first valve assembly control port (4) supplied to the first control inlet (6.3) exceeds a predetermined threshold or if a pressure supplied to the second control inlet (6.4) exceeds a predetermined threshold.

3. The parking valve assembly (1) according to claim 2, further comprising
- a sliding element (6.9) configured to be moved between a first sliding element position and a second sliding element position according to the first control pressure from the first valve assembly control port (4) supplied to the first control inlet (6.3) and according to the pressure supplied to the second control inlet (6.4).

4. The parking valve assembly (1) according to claim 3, wherein
the pressure-controlled valve (6) comprising a first pressure chamber (6.5) and a second pressure chamber (6.6), wherein a first piston (6.7) is movably provided limiting the first pressure chamber (6.5) and a second piston (6.8) is movably provided limiting the second pressure chamber (6.6), wherein the first pressure chamber (6.5) is connected to the first control inlet (6.3) and the second pressure chamber (6.6) is connected to the second control inlet (6.4), wherein the first piston (6.7) and the second piston (6.8) are configured to apply a force on the sliding element according to the pressure acting on the first piston (6.7) and according to the pressure acting on the second piston (6.8).

5. The parking valve assembly (1) according to claim 4, wherein
the second pressure chamber (6.6) is provided in the first piston (6.7).

6. The parking valve assembly (1) according to claim 4 or 5, wherein
the second piston (6.8) is connected to the sliding element (6.9) or formed as one piece with the sliding element (6.9).

7. The parking valve assembly (1) according to one of the preceding claims, further comprising
- a switching element (7), wherein
the switching element (7) comprises a first switching state (7.1) configured to disconnect the pressure-controlled valve (6) from the at least one valve assembly output port (3) and connecting the valve assembly supply port (2) to the at least one valve assembly output port (3), and wherein the switching element (7) comprises a second switching state (7.2) configured to connect the pressure-controlled valve (6) to the at least one valve assembly output port (3) and to disconnect the valve assembly supply port (2) from the at least one valve assembly output port (3).

8. The parking valve assembly (1) according to claim 7 further comprising
- a second valve assembly control port (5) configured to receive a second control pressure, wherein
the switching element (7) comprises a control inlet (7.3) connected to the second valve assembly control port (5), wherein
the switching element (7) is configured to switch into the second switching state (7.2) if the second control pressure supplied to the control inlet (7.3) exceeds a predetermined threshold and to switch into the first switching state (7.1) if the second control pressure supplied to the control inlet (7.3) is below the predetermined threshold.

9. The parking valve assembly (1) according to claim 8, wherein
the switching element (7) comprises a switching element sliding element (7.4) configured to be moved between a first switching element sliding element position and a second switching element sliding element position according to the second control pressure.

10. The parking valve assembly (1) according to one of the claims 7 to 9, comprising
- a valve body (9), wherein the pressure-controlled valve (6) and the switching element (7) are provided in the valve body (9).

11. A brake system (50) for a trailer, the brake system (50) comprises
- a parking valve assembly (1) according to one of the claims 1 to 10;
- a control unit (19);
- a brake system supply port (31); and
- at least one brake element (23), wherein
the at least one brake element (23) is pressure operated and configured to be activated when a brake pressure supplied to the at least one brake element (23) is below a predetermined threshold,
the control unit (19) is configured to control a first pneumatic control pressure supplied as the first control pressure to the first parking valve assembly control port (4).

12. The brake system (50) according to claim 11, wherein
the brake system (50) is configured to deactivate a parking state, by supplying a first control pressure exceeding the predetermined threshold to the first valve assembly control port (4).

13. The brake system (50) according to claim 12, wherein
the brake system (50) is configured to maintain the deactivation of the parking state after activation when the first control pressure reduced below the predetermined threshold.

14. The brake system (50) according to one of the preceding claims 11 to 13, with a parking valve assembly (1) according to claim 8 or 9, the brake system (50) further comprising
- a control valve assembly (30); and
- a pressure reservoir (18), wherein
the control valve assembly (30) is configured to connect the pressure reservoir (18) to the valve assembly supply port (2) when the switching element (7) is in the first switching state (7.1), wherein the brake system supply port (31) is connected to the second valve assembly control port (5).

15. A trailer for a vehicle, in particular for a commercial vehicle, comprising a brake system (50) according to one of the claims 11 to 14.
